# EUROPEAN PATENT SPECIFICATION

(11) **EP 2 850 815 B1**
(45) Date of publication and mention of the grant of the patent: **29.06.2016**
(21) Application number: 13724852.2
(22) Date of filing: 30.04.2013
(51) Int. Cl.: H04B 1/3877, H04M 1/04

(54) **CRADLE FOR A MOBILE TERMINAL**
BASISSTATION FÜR EIN MOBILES ENDGERÄT
BERCEAU POUR TERMINAL MOBILE

(30) Priority: 14.05.2012 FI 20125513; 14.11.2012 FI 20126196
(43) Date of publication of application: 25.03.2015
(73) Proprietor: Airbus Defence and Space Oy, 00380 Helsinki (FI)
(72) Inventor: AHONEN, Mikko, FI-00380 Helsinki (FI); KATAIKKO, Mika, FI-00380 Helsinki (FI); PESONEN, Juha-Pekka, FI-00380 Helsinki (FI); NEVALAINEN, Jari, FI-00380 Helsinki (FI); HAKKARAINEN, Tomi, FI-00380 Helsinki (FI); VAARANIEMI, Ismo, FI-00380 Helsinki (FI); REINILÄ, Jarno, FI-00380 Helsinki (FI)
(74) Representative: Kolster Oy Ab
(86) International application number: PCT/FI2013/050479
(87) International publication number: WO 2013/171367

(56) References cited:
- WO-A1-2008/058523
- US-B2- 7 801 572

## Description

### FIELD

The present invention relates to a cradle for a mobile terminal, and especially to a cradle comprising a side connector contact.

### BACKGROUND ART

It is well known to provide various types of cradles for mobile terminals for hands-free operation of the mobile terminal and/or for charging the mobile terminal. Typically a cradle contains in the bottom part of the cradle a connector contact for charging, and in the bottom part or in a side of the cradle one or more communications connector contacts for different inputs and/or outputs. For example, a published patent application US 2011/028105 discloses a solution in which a rotating pocket is provided, the rotating pocket comprising in its bottom, or near the bottom in the background part of the rotating pocket, a connector contact for charging and one or more side connector contacts for other inputs and outputs.

Thanks to the evolvement of a so called multipurpose connector contact, i.e. a connector contact providing both charging and other inputs and outputs, it is possible to minimize the size of mobile terminals since space is required only for one connector contact. If the one connector contact is placed in a side of a mobile terminal, the size of the mobile terminal will be smaller compared to a solution in which the one connector contact is in the bottom part. For a mobile terminal having one connector contact that is in the mobile side, a cradle is needed. A straightforward solution is to use the solution disclosed in the patent application US 2011/028105 without the bottom connector contact. However, the solution disclosed in the patent application US 2011/028105 for side connector contacts in the cradle is rather complicated with several rotating arms and the rotating pocket.

US patent 7,801,572 discloses another kind of a cradle.

### SUMMARY

An object of the present invention is thus to provide a cradle with less complicated means for providing a side connector contact. The object of the invention is achieved by a cradle housing characterized by what is stated in the independent claim. The preferred embodiments of the invention are disclosed in the dependent claims.

The invention is based on the idea of having in a side portion of a cradle at least one movable first means comprising a connector contact, and at least one second means movable substantially perpendicular to the first means and being configured to lock the first means to a position in which the connector contact will be engaged to a corresponding connector contact in a mobile terminal positioned to the cradle.

### BRIEF DESCRIPTION OF THE DRAWINGS

In the following different embodiments will be described in greater detail with reference to the attached drawings, in which
Figures 1A and 1B are three-dimensional front views of exemplary cradles;
Figure 1C is a three-dimensional front view of an exemplary cradle with a mobile terminal;
Figure 2A is a top view of a top portion of an exemplary cradle;
Figure 2B illustrates locking mechanism in the top portion of Figure 2A;
Figure 3 is a three-dimensional detail view of the bottom portion of an exemplary cradle;
Figures 4A and 4B are cross section views illustrating an exemplary latch mechanism in a locked position and unlocked position, correspondingly;
Figures 5A and 5B are cross section views illustrating exemplary clamp mechanisms;
Figure 6 is a three-dimensional inside view illustrating an exemplary connector contact arrangement;
Figure 7 is a cross section view illustrating an exemplary antenna probe mechanism; and
Figure 8 illustrates the cradle in a desktop charger.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Below different examples are illustrated assuming that the mobile terminal for which the cradle is designed, is a TETRA (Terrestial Trunked Radio) handheld mobile terminal, for example a TH1 n, without restricting the invention to such mobile terminals. It should be appreciated that the cradle can be used with any mobile terminal having a side connector, basic principles remains the same, only dimensions and the shape of the mobile terminal has to taken into account when determining the dimensions of the cradle and different means the cradle comprises.

Below terms vertical and horizontal are used for the sake of clarity to depict the perpendicular movements. By vertical is meant a direction that is aligned with a side portion of the cradle. By horizontal is meant a direction that is perpendicular to the vertical, and typically but not necessarily aligned with the top and/or bottom of the cradle. With substantially vertical movement is meant herein a movement that may deviate slightly from the vertical axis defined by means of the cradle but most part of the movement happens vertically. With substantially horizontal movement is meant herein a movement that may deviate slightly from the horizontal axis defined by means of the cradle but most part of the movement happens horizontally.

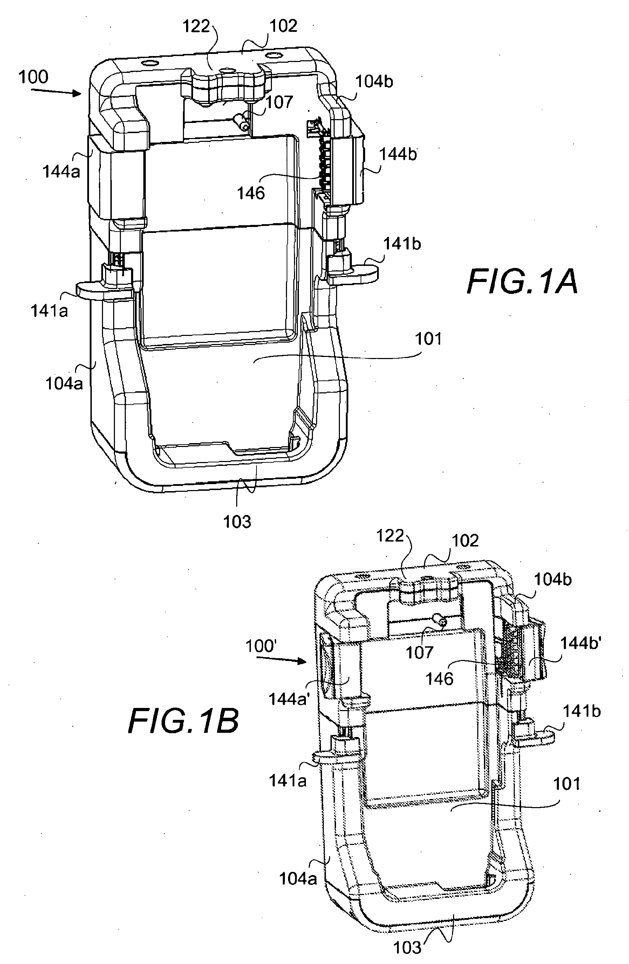

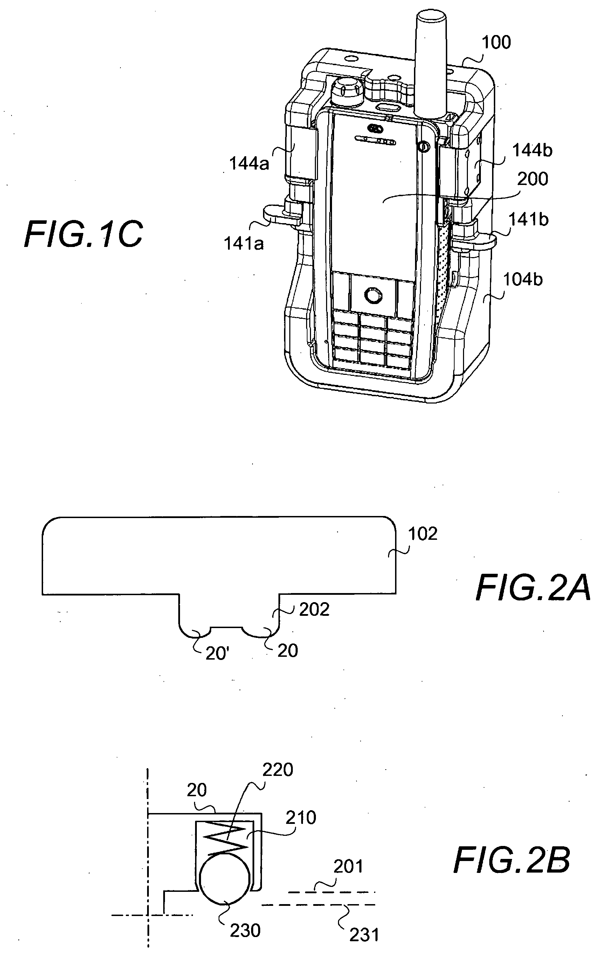

Figures 1A, 1B and 1C are front views of exemplary cradle housings 100, 100' called below simply a "cradle"; Figures 1A and 1B both illustrating an empty cradle 100 and Figure 1C illustrating a cradle 100 with a mobile terminal 200. The difference between the cradle 100 illustrated in Figure 1A and the cradle 100' illustrated in Figure 1B is in the way the substantially horizontal back and forth movement is achieved, i.e. in the way the first means are implemented. The cradle 100, 100' comprises a back wall 101 wherefrom a top portion 102, a bottom portion 103 and side portions 104a, 104a' and 104b, 104b' extend to provide a docking area for a mobile terminal in a form of a recess.

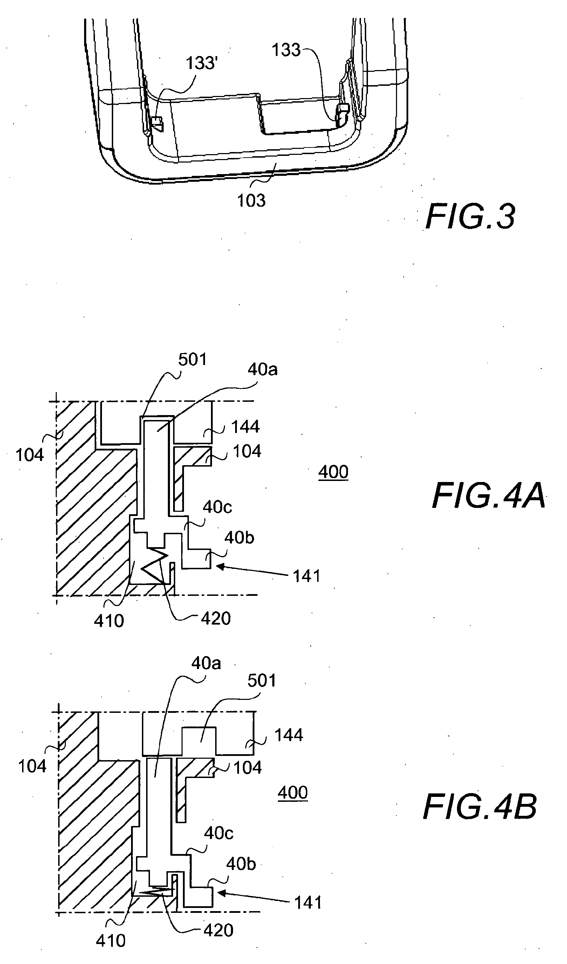

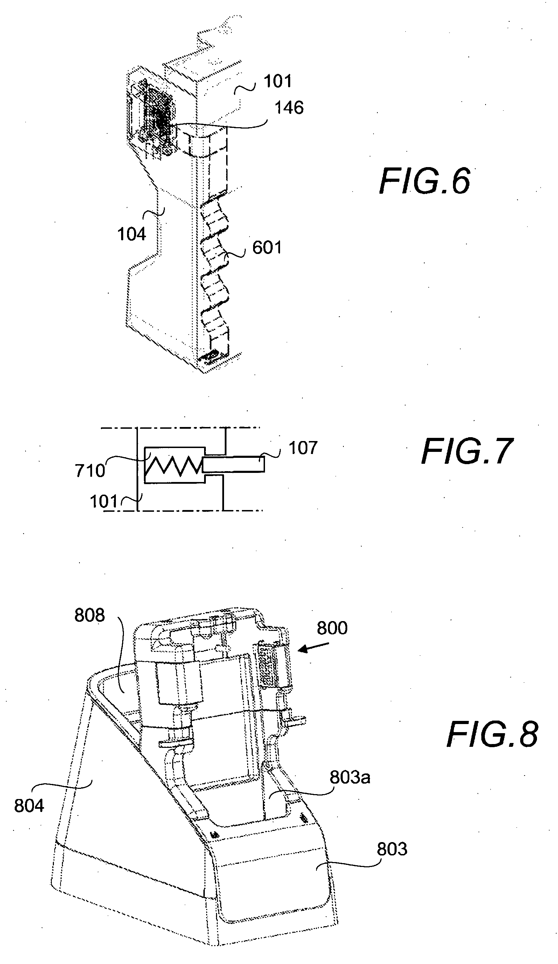

In the illustrated examples, a mechanical support and locking is provided by the bottom portion 103 and the top portion 102. The top portion 102 comprises a locking mechanism 122 described in more detail with Figures 2A and 2B, and details of the bottom portion are illustrated in Figure 3. It should be appreciated that in another example, mechanical support and/or locking may be provided by some other means. An example of the other means comprising a bottom portion having a pocket shape, as is illustrated in Figure 8.

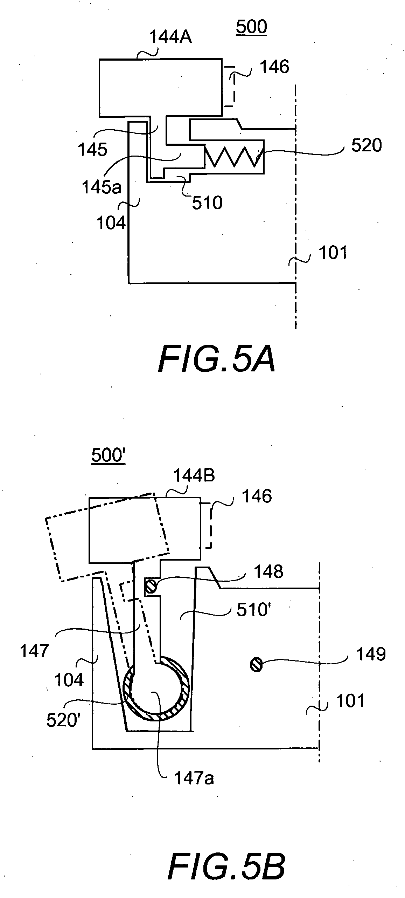

In the illustrated examples both side portions 104a and 104b comprise as the first means a clamp part 144a, 144a', 144b, 144b', i.e. a part that is movable substantially horizontally back and forth, between an open position illustrated in Figures 1A and 1B, and a closed position illustrated in Figure 1C. One of the clamp parts, the clamp part denoted by 144b, 144b' comprises a side connector contact 146. At a locked state of the clamp part 144b, 144b', i.e. in its closed position, when the cradle contains the mobile terminal, the connector contact is connected to a corresponding connecter contact in the side of the mobile terminal. A clamp part, below simply a "clamp" and denoted by 144, with its exemplary mechanisms will be described in more detail in connection with Figures 5A and 5B in which the clamp is exceptionally denoted by 144A and 144B, respectively.

Both side portions comprise for the clamp as the second means a latch 141 a, 141b, i.e. a part that is movable substantially vertically up and down, and will in up-position lock the corresponding clamp. The latch with its exemplary mechanism will be described in more detail in connection with Figures 4A and 4B.

In the illustrated example, an external antenna connection contact is provided by an antenna probe 107 connector extending from upper part of the back wall 101. The antenna connection contact is described in more detail with Figure 7. However, the antenna connection contact may be left out from the cradle. For example, a cradle to be mounted into a vehicle, i.e. a cradle for a car kit, may comprise, but does not necessarily comprise, the antenna connection contact, and a cradle intended to be used as a desktop charger and/or a programming adapter typically does not comprise the antenna connection contact.

The back wall 101 and/or the bottom portion 103 may comprise further recesses to better accommodate the mobile terminal they are designed for, as is illustrated in Figures 1A and 1B. Further, the clamp may be shaped to comprise a recess for a finger, as is illustrated in Figure 1B.

The exemplary cradles may be used as follows:
The mobile terminal is first placed to the cradle so that it is mechaically locked and supported from the bottom and top of the terminal. When the mobile terminal has been placed to the cradle, the side connector contact is connected by pushing, by a thumb and forefinger, for example, the clamps towards the terminal. The clamps are locked by the latches when the side connector contact engages with a corresponding connector contact in the terminal and the connector contacts form a linked conductor suitable for carrying electricity.

The terminal is released from the cradle by pushing down, by the thumb and the fore finger, for example, the latches thereby unlocking the clamps and enabling them to move to the open unlocked position. That also causes that the side connector contact is not any more engaged with the corresponding connector contact in the mobile terminal. However, the mobile terminal is still supported and mechanically locked in the cradle from the top and bottom portions. The mobile terminal may then be pulled away from the cradle by taking a good grip from the sides of the terminal and pulling a terminal towards the user. As can be seen especially from Figures 1A and 1B, the side portions are shaped to facilitate the above described placing and removing of the mobile terminal.

The top portion of the cradle comprises the locking mechanism for supporting and holding the mobile terminal. Figure 2A is a top view illustrating an exemplary shaping of the locking mechanism and the upper part of the top portion. In the illustrated example the top portion 102 comprises a locking mechanism 202 which comprises two protruding parts 20, 20'. It should be appreciated that the locking mechanism may comprise one or more protruding parts, the location and shape of which is determined by the mobile terminal the cradle is designed for.

Figure 2B is a cross section view of a protruding part. The protruding part 20 comprises, as a locking mechanism, a cavity 210, a spring 220 mounted to the cavity, and a ball 230 inserted into the cavity and being able to rotate around its rotating axel in the cavity. The cavity 210 is formed so that it does not let the ball 230 to fall out of the cavity 210 but lets the ball 230 to extend out of the cavity so that the bottom surface 231 of the ball is below the bottom surface 201 of the parts of the protruding part that are part of the housing. For that purpose, the cavity's diameter in the bottom endpoint is smaller than the ball's diameter, and the cavity's diameter increases to be bigger (even slightly bigger suffices) than the ball's diameter during a distance smaller than a radius of the ball. For inserting the spring and the ball, the protruding part may be manufactured by using a cover (not illustrated in Figure 2B), that forms the upper end of the cavity 210.

When the mobile terminal is in the cradle, the spring forces (presses down) the ball towards the upper side of the mobile terminal, thereby providing the mechanical locking. While the mobile terminal is placed into the cradle or removed from the cradle, the ball rotates around its rotating axel and the spring provides a possibility to the ball to move a little bit upwards, the rotating and upward movement facilitating the placing/removal of the mobile terminal. It should be appreciated that instead of a ball, an article having another form that is capable of rotating around a rotating axel, like a cylinder, may be used. The form may depend on the cross section form of the cavity.

Figure 3 illustrates a detail of the bottom portion. The bottom portion 103 has a u-bracket shape, the u-sides being towards the side portions, and comprises guiding bars 133, 133'. The guiding bars 133, 133' are preferably but not necessarily facing each other and locating in opposite side parts of the bottom portion. The guiding bars may be separate parts fixed to the cradle or they may be integral part of the bottom portion, i.e. formed with the bottom portion. The guiding bars may extend to the back wall, or be shorter. It should be appreciated that the bottom portion may be without guiding bars, or there may be one or more guiding bars in a side part of the bottom portion, and the other side may have the same or another amount of guiding bars or no guiding bars. The guiding bars 133, 133' facilitate the placing of the terminal to the cradle. When the terminal is in the cradle, the bottom portion with the locking mechanism in the top portion supports the terminal and mechanically lock the terminal to the cradle.

Figures 4A and 4B are cross section side view details of the side portion 104, the cross section details illustrating the latch 141 with its mechanism 400 and how it locks the clamp 144 in the locked situation and how it is in an unlocked situation, correspondingly. The latch mechanism 400 comprises a latch 141, a spring 420 and two cavities, a first cavity 410 in the side portion 104 and a second cavity 501 in the clamp 144 that in the locked position forms one cavity, as can be seen from Figure 4A. The side portion 104 is slash filled in Figures 4A and 4B, since in the cross section view the first cavity 410 cuts the side portion so that a part of the side portion seems to be a separate part although in real life its part of the side portion, the cavity only passes through it. The latch 141 comprises a tap portion 40a, a pushing portion 40b and a connection portion 40c connecting the tap portion 40a and the pushing portion 40b. In the illustrated example the connection portion 40c has an L-shape. However, it should be appreciated that any other shape may be used, or the pushing portion 40b may directly be connected the tap portion 40a. The spring 420 for the latch locates in the bottom of the first cavity part 410 in the side portion. The spring forces the latch upwards and holds it in the locked position. The pushing portion 40b extends outwards from the cradle so that the user can easily push it by fingers downwards thereby compressing the spring and causing the tap portion 40a, which may also be called a locking probe or a locking portion, to move downwards so that at the end the tap portion 40a is not any more in the second cavity 501 in the clamp 144. That unlocks, i.e. releases, the clamp 144.

It should be appreciated that the example illustrated in Figures 4A and 4B is only one example of the latch mechanism, i.e. latching means or means for providing a latch (or means for locking another means that preferably are facing the means for locking). Other members or means or mechanisms may be used instead; it suffices that they provide a substantially vertical movement and a capability to lock a substantially horizontally moving means.

Figures 5A and 5B illustrate two different exemplary ways to implement a clamp or a corresponding horizontally back and forth movable means.

Figure 5A is a cross section side view detail of the side portion 104 just before it turns to the back wall, and the clamp 144A with its exemplary clamping mechanism 500, the cross section detail illustrating the clamp 144A in the unlocked position.

In the illustrated example, the side portion 104 comprises for the clamp 144A a cavity 510, the cavity 510 being provided with a spring 520. The clamp 144A comprises a cantilever portion 145 extending to the cavity so that the cantilever portion 145 will be in physical contact with the spring. When the user pushes by using his/her finger the clamp 144A towards the inside of the docking area of the mobile terminal, the spring 520 is compressed and, as described above, the latching mechanism locks the clamp 144 and a communication connector contact 146, if such exists in the clamp, may make an electrical connection with a corresponding connector contact in the mobile terminal. The communication connector contact 146 is illustrated with dashed line since in the example only one of the clamps has such a contact. When the clamp 144A is unlocked, the spring 520 forces the cantilever portion 145, and thereby the clamp 144A, to move so that the clamp will be in the open position illustrated in Figure 5A.

The cantilever portion 145 is preferably shaped so that it enables the substantially horizontal back and forth movement and at the same time takes care of that the clamp 144A does not fall away from the cradle even in an unlocked (open) position. Therefore in the illustrated example the cantilever portion 145 comprises a further cantilever portion 145a, called herein ancon truss. The ancon truss extends from the cantilever portion and is dimensioned so that its endpoint remains all the time surrounded by the cradle, i.e. within a cavity.

Although not illustrated in Figure 5A, there may be one or more guidings for the clamp to facilitate its proper movement back and forth. For example, there may two guiding bars in the upper outer surface of the clamp and two guiding bars in the bottom outer surface of the clamp, and the cradle has grooves for the guiding bars.

Figure 5B is a cross section side view detail of the side portion 104 just before it turns to the back wall 101, and the clamp 144B with its exemplary clamping mechanism 500', the cross section detail with solid line illustrating the clamp 144B in the locked position, the double-dot-and-dash line illustrating the unlocked position of the clam 144B.

In the illustrated example, the side portion 104 comprises for the clamp 144B a cavity 510' that is shaped to enable a substantially horizontal back and forth pivotal movement between the unlocked (open) and locked (closed) position. The clamp 144B comprises an arm portion 147 extending to the cavity 510' and being pivotally connected the cradle by a pivot means 147a in the other end of the arm portion. The pivot means 147a may comprise, for example, cylindrical portions by means of which the arm and hence the clamp is mounted pivotally to the cradle, the pivot means allowing the horizontal back and forth rotational movement. In other words, the clamp 144B is moving around a pivot axis fixedly connected to the body of the cradle, the pivot axis being provided by the pivot means 147a.

In the illustrated example the cavity is further provided with a torsion spring 520' to cause the rotational movement. It should be appreciated that other means to obtain the rotational movement, i.e. pivoting the arm and/or the clamp, may be used as well. The torsion spring 520' is slash filled in Figure 5B, and part of the legs of the torsion spring 520' are not shown since the arm and the cradle construction are above them. The torsion spring 520' may be mounted around a cylindrical portion of the pivoting means and thereby being fixed to the cradle. However, it should be appreciated that other means and/or locations to mount the torsion spring 520' may be used as well. Further, the torsion string has preferably but not necessarily two legs both with an angle upwards or downwards.

To provide the rotational movement, in the illustrated example the arm portion 147 further comprises a spring locking slot 148 for one of the legs of the torsion spring 520'. The back wall 101 comprises another spring locking slot 149 for the other leg of the torsion spring 520'. When the user pushes by using his/her finger the clamp 144' towards the inside of the docking area of the mobile terminal, the arm 147 rotates around a pivoting axel in the end part 147a, loading the spring 520' by moving the leg in the spring locking slot 148 in the arm, and the latching mechanism locks the clamp 144B to a closed position. In the closed position, a communication connector contact 146, if such exists in the clamp 144B, may make an electrical connection with a corresponding connector contact in the mobile terminal. The communication connector contact 146 is illustrated with dashed line since in the example only one of the clamps has such a contact. When the clamp is unlocked, the spring 520', or more precisely, the leg in the spring locking slot 148 in the arm portion, forces the arm portion 147, and thereby the clamp 144B, to pivotally move so that the clamp will be in the open position.

While the leg having a physical contact to the cradle via the spring locking slot 148 in the arm moves, the leg in the spring locking slot 149 stays in the same location. Hence, the torsion spring may be mounted separately from the arm portion and/or the clamp, it suffices that the torsion spring comprises one leg or corresponding means to move the clamp to the open (unlocked) position when the locking by means of corresponding latch is opened.

Further, the torsion spring may be any kind of a torsion spring, such as an elastomeric torsion spring or a metal torsion spring, and the cavity may be provided with any number of torsion springs.

It should be appreciated that the examples illustrated in Figures 5A and 5B are only examples of the clamp, i.e. clamping means or means for providing a clamp or means for clamping or means for sliding. Other members or means or mechanisms may be used instead; it suffices that they provide a substantially horizontal back and forth movement and means enabling the latch, or corresponding means, to lock the clamp or corresponding means.

Figure 6 illustrates the connector contact arrangement in the side portion. The connector contact arrangement comprises a side connector contact 146, and a flex 601 comprising the wiring needed for the connector contact. In the illustrated example, the flex passes via the side portion 104 to the back wall portion 101, and in the back wall portion it will pass to the bottom outer surface of the cradle to provide the connection needed. It should be appreciated that other kind of arrangements may be used as well.

The side connector contact 146 may be any type of a connector contact configured to be engaged with a corresponding connector contact in the mobile terminal. For example, the side connector contact 146 may comprise a plurality of pogo pins contacts, or be a contact for a micro-USB. The side connector contact preferably but not necessarily provides contacts for charging, for audio, for data and for programming the terminal. However, it may provide contacts for only one or some of the previous mentioned purposes, and/or for some other purposes. Audio contacts may comprise contacts for speakers, for push to talk, etc.

Figure 7 is a cross section detail on an antenna connection arrangement. The arrangement comprises an antenna probe 107 (i.e. an antenna connection contact) extending outwards of the back wall, and in the back wall 101 a cavity 710 comprising a spring 720, the spring forcing the antenna probe, when the mobile station is placed in the cradle, to be inserted into a corresponding antenna recess in the mobile terminal and thereby to reliably connect with the mobile terminal's antenna arrangement. The cavity 710 is preferable long enough to allow the antenna probe 107 to enter the cavity in case the mobile terminal does not have a corresponding antenna recess or the user has forgotten to remove a protective door, or corresponding means, that covers the antenna recess when the mobile terminal is in hand. Hence, the cavity and the spring provides a telescoping nature to the antenna probe, ensuring a reliable connection with the mobile terminal's antenna arrangement and protecting the antenna probe from damage.

Figure 8 illustrates a cradle 800 intended to be used as a desktop charger. The cradle differs from those illustrated in Figures 1A to 1C in that the bottom portion 803 comprises a pocket 803a for the mobile terminal, and the lower end 804 of the side wall extends beyond the back wall to form a further pocket 808 in which an additional battery may be charged, if the further pocket is provided with charging means (not illustrated in Figure 8). It should be appreciated that in another example there is no further pocket 808. Although in the illustrated example the cradle 800 comprises the antenna connection that need not be the case, as is said above.

The mobile terminal is first placed to the pocket 803a and then pushed towards the back wall of the cradle so that it will be mechanically locked and supported from the bottom and top of the terminal. Then the side connector contact is connected by pushing, by a thumb and forefinger, for example, the clamps towards the terminal. The clamps are locked by the latches when the side connector contact engages with a corresponding connector contact in the terminal and the connector contacts form a linked conductor suitable for carrying electricity and charging the mobile terminal. No other charging means are required.

To have, in addition to the pocket 803a, the top portion with the locking mechanism ensures that the mobile terminal is properly positioned for the connector contact to engage properly.

It should be appreciated that a desktop charger may comprise more than one cradle 800, the two or more cradles being integrated together to form a desktop charger enabling simultaneous charging of more than one mobile terminal.

Arrangements described above with Figure 8 may be used for a programming adapter in which the programming happens via the side connector, or for a combined desktop charger and a programming adapter.

Although not described above, the cradle housing may comprise several separate parts that are assembled together to form the cradle. The use of separate parts facilitates inserting springs, for example. Further, the cradle housing may comprise other cavities not illustrated herein.

Although in the illustrated example both side portions comprise the clamp and the latch, it should be appreciated that it suffices that only one of the side portions comprise the clamp and the latch.

Although in the illustrated example the other clamp does not comprise a connector contact, it should be appreciated that should another side connector contact needed, it may be added to the other clamp. Further, it should be appreciated that a clamp may comprise more than one connector contact, if needed, or there may be more clamp-latch pairs per side. Further, one latch may be used to lock more than one clamp.

Although in the illustrated examples the clamp locates above the latch, it should be appreciated that the latch may locate above the clamp as well.

It will be obvious to a person skilled in the art that, as technology advances, the inventive concept can be implemented in various ways. The invention and its embodiments are not limited to the examples described above but may vary within the scope of the claims.

## Claims

1. A cradle housing (100) for a mobile terminal, the cradle housing comprising a first side portion (144b) and a second side portion (144a), the first side portion comprising at least:
a movable first means (144b) that comprises a connector contact (146); and
a second means (141b)
**characterized in that**
the second means (141b) are movable substantially perpendicular to the first means, the second means facing in its one side the first means;
wherein the first means (144b) comprises in the side of the first means facing the second means a cavity (501) into which a portion (40a) of the second means may enter thereby locking the first means.

2. A cradle housing (100) as claimed in claim 1, the second side portion (144a) comprising at least;
a movable first means (144a); and
a second means (141 a) movable substantially perpendicular to the first means, the second means facing in its one side the first means;
wherein the first means (144a) comprises in the side of the first means facing the second means a cavity (501) into which a portion (40a) of the second means may enter thereby locking the first means.

3. A cradle housing (100) as claimed in claim 1 or 2, the cradle housing comprising for each first means at least one spring (520) causing the first means to move to an unlocked position, the spring being compressed, when the first means is locked by the second means.

4. A cradle housing (100) as claimed in claim 3, wherein the first means is pivotally connected the cradle housing and the cradle housing comprises for the first means a cavity (501) shaped to allow a pivotal movement.

5. A cradle housing (100) as claimed in claim 4, wherein the spring (520) causing the movement of the first means is a torsion spring.

6. A cradle housing (100) as claimed in any of the preceding claims, the cradle housing comprising for each second means at least one spring (420), the spring causing the portion (40a) of the second means to enter to the cavity (501), the spring being compressed when the portion of the second means cannot enter to the cavity.

7. A cradle housing (100) as claimed in any of the preceding claims, the cradle housing comprising a bottom portion (103) extending from a back wall (101) of the cradle, the bottom portion being configured to mechanically support the mobile terminal when the mobile terminal is inserted into the cradle.

8. A cradle housing (100) as claimed in claim 7, wherein the bottom portion (103) comprises one or more guiding bars (133, 133') for an insertion of the mobile terminal.

9. A cradle housing (100) as claimed in any of the preceding claims, the cradle housing comprising a top portion (102) comprising a locking mechanism (202) for mechanically locking the terminal into the cradle after the terminal is inserted into the cradle.

10. A cradle housing (100) as claimed in claim 9, wherein the locking mechanism (202) is provided by means of a cavity (201), the cavity comprising at least one spring (220) and a rotating means (230), the at least one spring forcing the rotating means downwards and allowing the rotating means to move upwards when the mobile terminal is inserted to or removed from the cradle, the outer surface of the rotating means extending outwards from the bottom surface of the top portion.

11. A cradle housing (100) as claimed in any of the preceding claims, further comprising an antenna probe (107) extending from the back wall, the back wall (101) comprising for the antenna probe a cavity (710), the cavity comprising a spring forcing allowing the antenna probe to extend outwards from the surface of the back wall, the cavity being deep enough to compress the spring and accommodate the antenna probe if an antenna recess in the mobile terminal is not available for the antenna probe to enter into it.

12. A cradle housing (100) as claimed in any of the preceding claims, wherein the first means (144b) is movable substantially horizontally and the second means (141 b) is movable substantially vertically.

13. A cradle housing (100) as claimed in any of the preceding claims, wherein the first means (144b) is a clamp.

14. A cradle housing (100) as claimed in any of the preceding claims, wherein the second means (141 b) is a latch.

15. A cradle housing (100) as claimed in any of the preceding claims, wherein the cradle housing is for a car kit, a desktop charger, or a programming adapter.

## Patentansprüche

1. Eine Halterung (100) für ein mobiles Endgerät, wobei die Halterung einen ersten Seitenabschnitt (144b) sowie einen zweiten Seitenabschnitt (144a) umfasst und der erste Seitenabschnitt mindestens folgendes umfasst:
- ein bewegliches erstes Mittel (144b), welches einen Steckkontakt (146) umfasst; und
- ein zweites Mittel (141 b),
**dadurch gekennzeichnet, dass** das zweite Mittel (141 b) im Wesentlichen senkrecht zu dem ersten Mittel beweglich ist, und das zweite Mittel auf einer Seite dem ersten Mittel gegenübersteht; wobei das erste Mittel (144b) auf der dem zweiten Mittel gegenüberliegenden Seite einen Hohlraum (501) umfasst, in welchen ein Teil (40a) des zweiten Mittels eindringen kann und dadurch das erste Mittel verriegelt.

2. Eine Halterung (100) gemäß Anspruch 1, wobei der zweite Seitenabschnitt (144a) mindestens folgendes umfasst:
- ein bewegliches erstes Mittel (144a); und
- ein zweites Mittel (141 a), das im Wesentlichen senkrecht zu dem ersten Mittel beweglich ist, und wo das zweite Mittel auf einer Seite dem ersten Mittel gegenübersteht;
wobei das erste Mittel (144a) auf der dem zweiten Mittel gegenüberliegenden Seite einen Hohlraum (501) umfasst, in welchen ein Teil (40a) des zweiten Mittels eindringen kann und dadurch das erste Mittel verriegelt.

3. Eine Halterung (100) gemäß Anspruch 1 oder 2, wobei die Halterung für jedes erste Mittel mindestens eine Feder (520) umfasst, welche bewirkt, dass sich das erste Mittel in eine unverriegelte Position bewegt, da die Feder komprimiert ist, wenn das erste Mittel durch das zweite Mittel verriegelt ist.

4. Eine Halterung (100) gemäß Anspruch 3, wobei das erste Mittel schwenkbar mit der Halterung verbunden ist und wobei die Halterung für das erste Mittel einen Hohlraum (501) umfasst, der gebildet ist, um eine Schwenkbewegung zu ermöglichen.

5. Eine Halterung (100) gemäß Anspruch 4, wobei die Feder (520), welche die Bewegung des ersten Mittels bewirkt, eine Torsionsfeder ist.

6. Eine Halterung (100) gemäß einem der vorstehenden Ansprüche, wobei die Halterung für jedes zweite Mittel mindestens eine Feder (420) umfasst, und die Feder bewirkt, dass der Abschnitt (40a) des zweiten Mittels in den Hohlraum (501) eindringt, und wobei die Feder komprimiert wird, wenn der Abschnitt des zweiten Mittels nicht in den Hohlraum eindringen kann.

7. Eine Halterung (100) gemäß einem der vorstehenden Ansprüche, wobei die Halterung einen Bodenabschnitt (103) umfasst, der sich von einer Rückwand (101) der Halterung erstreckt, und wobei der Bodenabschnitt konfiguriert ist, um das mobile Endgerät mechanisch zu tragen, wenn das mobile Endgerät in die Halterung eingesetzt wird.

8. Eine Halterung (100) gemäß Anspruch 7, wobei der Bodenabschnitt (103) eine oder mehrere Führungsstangen (133, 133') zum Einsetzen des mobilen Endgeräts umfasst.

9. Eine Halterung (100) gemäß einem der vorstehenden Ansprüche, wobei die Halterung einen oberen Abschnitt (102) mit einem Verriegelungsmechanismus (202) umfasst, um das Endgerät mechanisch in der Halterung zu verriegeln, nachdem es in die Halterung eingesetzt worden ist.

10. Eine Halterung (100) gemäß Anspruch 9, wobei der Verriegelungsmechanismus (202) mittels eines Hohlraums (201) bereitgestellt wird, wobei der Hohlraum mindestens eine Feder (220) und drehbare Mittel (230) umfasst, und wobei die mindestens eine Feder die drehbaren Mittel nach unten forciert und den drehbaren Mitteln eine Bewegung nach oben ermöglicht, wenn das mobile Endgerät in die Halterung eingesetzt oder daraus entfernt wird und wobei die Außenfläche der drehbaren Mittel sich ab der Bodenoberfläche des oberen Abschnitts nach außen erstreckt.

11. Eine Halterung (100) gemäß einem der vorstehenden Ansprüche, die darüber hinaus einen Antennenfühler (107) umfasst, der sich von der Rückwand erstreckt, wobei die Rückwand (101) einen Hohlraum (710) für den Antennenfühler umfasst, der Hohlraum eine Feder umfasst, welcher der Antenne ermöglicht, sich über die Rückwand hinaus zu erstrecken, und wobei der Hohlraum tief genug ist, um die Feder zu komprimieren und den Antennenfühler aufzunehmen, wenn am mobilen Endgerät keine Aussparung für die Antenne vorhanden ist, in den der Antennenfühler eindringen kann.

12. Eine Halterung (100) gemäß einem der vorstehenden Ansprüche, wo das erste Mittel (144b) im Wesentlichen horizontal beweglich ist und das zweite Mittel (141 b) im Wesentlichen vertikal beweglich ist.

13. Eine Halterung (100) gemäß einem der vorstehenden Ansprüche, wobei das erste Mittel (144b) eine Klemme ist.

14. Eine Halterung (100) gemäß einem der vorstehenden Ansprüche, wobei das zweite Mittel (141b) ein Riegel ist.

15. Eine Halterung (100) gemäß einem der vorstehenden Ansprüche, wobei die Halterung für eine Freisprechanlage, ein Tischladegerät oder einen Programmieradapter bestimmt ist.

## Revendications

1. Logement de type berceau (100) pour un terminal mobile, le logement de type berceau comprenant une première partie latérale (144b) et une seconde partie latérale (144a), la première partie latérale comprenant au moins :
un premier moyen mobile (144b) qui comprend un contact de connecteur (146) ; et
un second moyen (141b)
**caractérisé en ce que**
le second moyen (141b) est mobile sensiblement perpendiculairement au premier moyen, le second moyen faisant face sur son côté particulier au premier moyen ;
dans lequel le premier moyen (144b) comprend sur le côté du premier moyen faisant face au second moyen une cavité (501) dans laquelle une partie (40a) du second moyen peut pénétrer verrouillant de ce fait le premier moyen.

2. Logement de type berceau (100) selon la revendication 1, la seconde partie latérale (144a) comprenant au moins :
un premier moyen mobile (144a) ; et
un second moyen (141a) mobile sensiblement perpendiculairement au premier moyen, le second moyen faisant face sur son côté particulier au premier moyen ;
dans lequel le premier moyen (144a) comprend sur le côté du premier moyen faisant face au second moyen une cavité (501) dans laquelle une partie (40a) du second moyen peut pénétrer verrouillant de ce fait le premier moyen.

3. Logement de type berceau (100) selon la revendication 1 ou 2, le logement de type berceau comprenant pour chaque premier moyen au moins un ressort (520) amenant le premier moyen à se déplacer jusqu'à une position déverrouillée, le ressort étant comprimé, quand le premier moyen est verrouillé par le second moyen.

4. Logement de type berceau (100) selon la revendication 3, dans lequel le premier moyen est relié de manière pivotante au logement de type berceau et le logement de type berceau comprend pour le premier moyen une cavité (501) mise en forme pour permettre un mouvement pivotant.

5. Logement de type berceau (100) selon la revendication 4, dans lequel le ressort (520) provoquant le mouvement du premier moyen est un ressort de torsion.

6. Logement de type berceau (100) selon l'une quelconque des revendications précédentes, le logement de type berceau comprenant pour chaque second moyen au moins un ressort (420), le ressort amenant la partie (40a) du second moyen à pénétrer dans la cavité (501), le ressort étant comprimé quand la partie du second moyen ne peut pas pénétrer dans la cavité.

7. Logement de type berceau (100) selon l'une quelconque des revendications précédentes, le logement de type berceau comprenant une partie de fond (103) s'étendant à partir d'une paroi arrière (101) du berceau, la partie de fond étant configurée pour supporter mécaniquement le terminal mobile quand le terminal mobile est inséré dans le berceau.

8. Logement de type berceau (100) selon la revendication 7, dans lequel la partie de fond (103) comprend une ou plusieurs barres de guidage (133, 133') pour une insertion du terminal mobile.

9. Logement de type berceau (100) selon l'une quelconque des revendications précédentes, le logement de type berceau comprenant une partie supérieure (102) comprenant un mécanisme de verrouillage (202) pour verrouiller mécaniquement le terminal dans le berceau après que le terminal est inséré dans le berceau.

10. Logement de type berceau (100) selon la revendication 9, dans lequel le mécanisme de verrouillage (202) est réalisé au moyen d'une cavité (201), la cavité comprenant au moins un ressort (220) et un moyen de rotation (230), l'au moins un ressort forçant le moyen de rotation vers le bas et permettant au moyen de rotation de se déplacer vers le haut quand le terminal mobile est inséré ou retiré du berceau, la surface extérieure du moyen de rotation s'étendant vers l'extérieur à partir de la surface de fond de la partie supérieure.

11. Logement de type berceau (100) selon l'une quelconque des revendications précédentes, comprenant en outre une sonde d'antenne (107) s'étendant à partir de la paroi arrière, la paroi arrière (101) comprenant pour la sonde d'antenne une cavité (710), la cavité comprenant un ressort forçant et permettant à la sonde d'antenne de s'étendre vers l'extérieur à partir de la surface de la paroi arrière, la cavité étant assez profonde pour comprimer le ressort et loger la sonde d'antenne si une partie en retrait d'antenne dans le terminal mobile n'est pas disponible pour que la sonde d'antenne y pénètre.

12. Logement de type berceau (100) selon l'une quelconque des revendications précédentes, dans lequel le premier moyen (144b) est mobile sensiblement horizontalement et le second moyen (141b) est mobile sensiblement verticalement.

13. Logement de type berceau (100) selon l'une quelconque des revendications précédentes, dans lequel le premier moyen (144b) est une attache.

14. Logement de type berceau (100) selon l'une quelconque des revendications précédentes, dans lequel le second moyen (141b) est un verrou.

15. Logement de type berceau (100) selon l'une quelconque des revendications précédentes, dans lequel le logement de type berceau sert pour un kit de voiture, un chargeur de bureau, ou un adaptateur de programmation.
